# EUROPEAN PATENT APPLICATION

(11) **EP 1 686 812 A1**
(43) Date of publication of application: **02.08.2006**
(21) Application number: 05001854.8
(22) Date of filing: 28.01.2005
(51) Int. Cl.: H04N 9/80, H04N 7/10

(54) **Method and transmitter for processing a video signal**

(71) Applicant: TTE Germany GmbH, 78048 Villingen-Schwenningen (DE)
(72) Inventor: Sowig, Helmut, 78052 Villingen-Schwenningen (DE)
(74) Representative: Arnold, Klaus-Peter

(57) **Abstract**

The method for processing a video signal comprises the successive steps of: receiving an analog video signal (V1) having a luminance component (Y) and a color component (C), using a color decoder (4) for decoding the analog video signal (V1) into at least two color difference components (U, V), converting the output signals of the color decoder by use of an ADC (5) into digital signals, delaying the luminance component (Y) in the digital domain with regard to the color difference components (U, V), and, using a digital compression method for reducing the digital data rate.. The transmitter (T) using the method comprises in particular a modulator for modulating the compressed digital signal onto a carrier frequency for a use in a wireless digital home network.

## Description

### FIELD OF THE INVENTION

The present invention relates to a method and a transmitter for processing a video signal, in particular a video signal according to the PAL or SECAM television standard. It relates further to a wireless radio frequency transmission, using MPEG compression for the video content.

### BACKGROUND

Main distribution paths for video content are today broadcast, cable and storage media. But there is more and more demand for a wireless video distribution in private homes. Cheep solutions are known by using a simple frequency modulation of a 2,4 GHz carrier with an analog CVBS television signal. But the quality of such devices is limited and more over, only one video signal can be transmitted.

For a better flexibility, digital transmission concepts have to be used. Due to the limited available radio frequency bandwith, for such a system data compression, for example EMPEG compression, has to be used for the video content.

### SUMMARY OF THE INVENTION

It is the object of the present invention to provide a method for processing a video signal and a respective transmitter, which provide a high picture quality.

This object is achieved for a method as described in claim 1 and for a respective transmitter as described in claim 7. Preferred embodiments are described in the dependent claims.

According to the invention, the luminance signal is delayed with regard to the color information signal, in particular by a time corresponding to a horizontal line. This allows a better centering of the color signal with regard to the luminance signal. The delay is made in a preferred embodiment by a data compression encoder, for example an MPEG-2 encoder.

For the delay of the luminance signal only a small amount of memory is necessary and therefore, the already available memory of the data compression encoder can be used. The invention can be implemented therefore without any additional hardware costs. The transmitter using the method comprises in particular a modulator for modulating the compressed digital signal onto a carrier frequency for a use in a wireless digital home network.

### BRIEF DESCRIPTION OF THE DRAWINGS

Preferred embodiments of the invention are explained in more detail with regard to schematic drawings, which show:
- Figure: A transmission system with a transmitter and a receiver for a wireless transmission of a digital video signal.

### DETAILED DESCRIPTION OF PREFERRED EMBODIMENTS

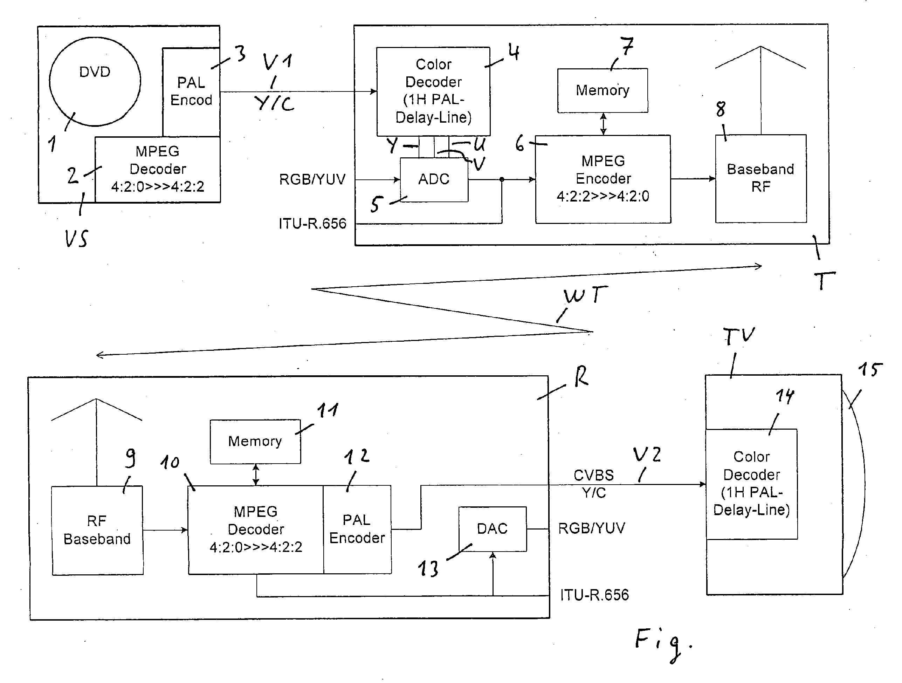

In the figure a video source VS is shown, for example a DVD player. The DVD player comprises a DVD reader 1, an MPEG decoder 2 and a PAL encoder 3 for providing an analog video output signal V1, as well as respective audio signals (not shown).

When the DVD player is in a playback mode, the DVD reader 1 provides a digital data stream, which is coupled to the MPEG decoder 2 for processing. The video content contained on the DVD is in a 4:2:0 video format, which is converted by the MPEG decoder 2 to a 4:2:2 video signal, being appropriate for the PAL encoder 3. The PAL encoder provides a television signal according to the PAL television standard, which is used for example in many European countries. The video source may have also a SECAM encoder in accordance with a television standard, which is used for example in France.

As known, a PAL television signal CVBS comprises a luminance signal Y and a color signal C, which are known also as Y/C signal, the color signal C containing two color difference signals U and V, modulated onto one carrier. The signals U and V are also known as C_{R} and C_{B} according to the CCIR 601 standard. As known, the PAL television signal comprises a phase shift of 180° of the color difference signal V between alternating lines and the color information is recovered by a PAL color decoder by an addition of the color signal C of two subsequent horizontal lines by use of a 1H delay line, which corresponds to an averaging of the color information of two horizontal lines. According to the SECAM television standard, the color difference signals U and V are transmitted in subsequent horizontal lines and then combined.

The video signal stored on the DVD corresponds to a 4:2:0 scanning, according to which the color signal of a horizontal line is scanned with half of the resolution as compared with the luminance signal, and the color signal of the subsequent horizontal line is omitted. Later, for the reproduction of the video signal, each the same color information is used for two subsequent horizontal lines.

As shown in the figure, the video signal V1 is coupled to a transmitter T, for example via a SCART cable, for transmitting the video information to a remote receiver R. The transmission WT from the transmitter T to the receiver R is in particular a wireless transmission, but may be made also via a cable, for example via a mains power line or a an optical fiber.

For an efficient transmission, the analog video signal V1 is digitized and encoded within the transmitter T in accordance with a digital data reduction method, for example by using an MPEG-2 or MPEG-4 compression standard. The transmitter T comprises therefore a color decoder 4, to which the video signal V1 is coupled and which decodes the color component C to at least two color difference signals U, V.

The output signal provided by the color decoder 4, here a Y, U, V signal, is digitized by an analog-digital-converter (ADC) 5, which provides a digital data stream for a digital data encoder 6. The data encoder 6 is for example a MPEG-2 encoder, which provides a data reduction from a 4:2:2 scanning, as provided by the ADC 5, into a 4:2:0 scanning, corresponding to a data stream, as stored onto a DVD. The data decoder 6 uses a memory 7 for the processing of the digital data. Because each PAL color decoder, also each SECAM color decoder, comprises a 1H delay line, for providing an averaging of two subsequent horizontal color signals in the case of PAL and for a recombination of the U, V signals in the case of SECAM, the color signal is effectively shifted by one horizontal line with respect to the luminance signal. But because of the reduced resolution of the human with regard to color, this effect is usually not visible.

The data encoder 6 provides a digital base band signal for a modulator 8, which converts the base band signal onto a high frequency carrier, in particular onto a radio frequency (RF), for the wireless transmission WT to the receiver R.

In the receiver R, the digital video signal is recovered from the carrier frequency for providing an analog video output signal V2, for example a CVBS signal comprising a Y and a C component. The receiver R operates in accordance with the transmitter T, but in the reverse direction, for converting the digital data into the analog video signal V2.

The receiver R comprises for this purpose a demodulator 9 for converting the high frequency signal into a digital base band signal. The signal provided by the demodulator 9 is decoded by a data decoder 10, in particular a MPEG-2 decoder, by using a memory 11. The data decoder 10 recovers a 4:2:0 analog video signal from the digital data signal, which is converted by the data decoder 10 into a 4:2:2 video signal, which is used by a PAL encoder 12 for providing a CVBS video signal V2 comprising a luminance signal Y and a color component C.

The output signal of the encoder 12, video signal V2, can be used now for operating a display device, for example a television set TV. In the display device TV again a 1H PAL delay line is used for converting the color difference signals contained in the color component C in a YUV signal and subsequently into a RGB signal, for providing three color signals R, G, B for a display, for example by using a cathode ray tube (CRT) 15.

The ADC 5 of the transmitter T may comprise further inputs for receiving RGB and/or YUV signals, as shown. Also, a digital signal in accordance with the ITU-R.656 standard may be coupled directly to the data encoder 6. The receiver R comprises correspondingly further outputs for providing analog RGB and/or YUV output signals via a digital-to-analog-converter 13, and for providing digital signals according to the ITU-R.656 standard.

The color decoder 4 provides a YUV signal with a luminance component Y and two color difference components U, V to the ADC 5, which provides a corresponding digital YUV signal to the encoder 6. According to the invention, the luminance signal Y is delayed by a horizontal line, 1H, corresponding to 64 microseconds in the case of PAL, with regard to the color difference components U, V. The delay can be made easily by the encoder 6 by using the memory 7. For a 1H delay, the encoder 6 stores the luminance signal of one horizontal line in the memory 7, and reads out the stored signal 64 microseconds later, skipping one horizontal line, for combining the delayed digital luminance component with the U, V digital color difference components arriving from the ADC 5. This allows a better centering of the color signals with regard to the luminance signal.

The delay of the luminance signal allows for compensating the optical impression of a vertical downshift of the color difference components with regard to the luminance component, which is made by the color decoder 4 of the transmitter T and also already made in the video source VS, being in this embodiment a DVD player. As shown in the figure, in the video source VS a 4:2:0 video signal comprising two averaged color difference signals for two horizontal lines is converted to a 4:2:2 video signal comprising therefore already a vertical downshift of the color difference signals. In the color decoder 4 of the transmitter T again a 1H PAL delay line is used for decoding the color difference signals of the video signal V1 being a CVBS signal. All these delays happen in each field of the interlaced television picture display, so that the vertical downshift of the color difference signals for the frame is twice as much.

With the invention, the downshift of the color difference components, caused by a color decoder, can be compensated therefore. Because the compensation is made in the digital domain, no additional hardware components are necessary. The memory capacity necessary for storing one or two horizontal lines of the color difference signals in the digital domain is very low and far below one Megabit.

In a preferred embodiment, the delay is activated automatically by the transmitter T depending on the source signal as coupled to one of the inputs of the transmitter T. In case a CVBS, YUV or Y/C input signal is selected, the delay is activated, and in case of a RGB or a digital input signal like ITU-R.656, the delay is disabled.

The invention as described with regard to the figure describes the situation with regard to a PAL video signal. For other video signals, the invention can be implemented correspondingly. The digital domain of the transmitter T and the receiver R is the same for a PAL television signal as well as for a SECAM television signal. The transmitter as described with regard to the figure can be used in particular for a wireless digital home network, but other applications, also modifications, are also possible for those skilled in the art without departing from the scope of the invention.

## Claims

1. Method for processing a video signal comprising the successive steps of:
receiving an analog video signal (V1) having a luminance component (Y) and a color component (C),
using a color decoder (4) for decoding the analog video signal (V1) into at least two color difference components (U, V),
converting the output signals of the color decoder by use of an ADC (5) into digital signals,
delaying the luminance component (Y) in the digital domain with regard to the color difference components (U, V), and,
using a digital compression method for reducing the digital data rate.

2. Method according to claim 1, wherein the luminance component (Y) is delayed in the digital domain with regard to the color difference components (U, V) by a time delay corresponding to a horizontal line.

3. Method according to claim 1 or 2, wherein an MPEG encoder (6), in particular an MPEG-2 or MPEG-4 encoder, is used for the digital compression.

4. Method according to claim 3, wherein a memory (7) coupled to the MPEG encoder (6) is used for delaying the luminance component (Y) with regard to the color difference components (U, V).

5. Method according to one of the preceding claims, wherein the analog video signal (V1) is a PAL or a SECAM television signal.

6. Method according to claim 5, wherein the color difference components (U, V) are the color difference components in accordance with the PAL or a SECAM television standard.

7. Transmitter (T), using a method in accordance with one of the preceding claims.

8. Transmitter in accordance with claim 8, wherein the delay is activated automatically by the transmitter (T) depending on the source signal coupled to an input of the transmitter (T).

9. Transmitter in accordance with claim 7 or 8, comprising a modulator for modulating the compressed digital signal onto a carrier frequency.

10. Transmitter in accordance with claim 9, wherein the transmitter (T) is usable as a part of a wireless digital home network.
